# EUROPÄISCHE PATENTANMELDUNG

(11) **EP 1 081 101 A1**
(43) Veröffentlichungstag der Anmeldung: **07.03.2001**
(21) Anmeldenummer: 00890258.7
(22) Anmeldetag: 25.08.2000
(51) Int. Cl.: C02F 11/12, C02F 9/00

(54) **Verfahren und Vorrichtung zum Trocknen von Klärschlamm**

(30) Priorität: 31.08.1999 AT 58699
(71) Anmelder: Weiss, Anton, 8354 St. Anna am Aigen (AT)
(72) Erfinder: Hausegger, Dieter, 8322 Studenzen (AT)
(74) Vertreter: Müllner, Erwin, Dr.

(57) **Zusammenfassung**

Bei einer mobilen Entwässerungsvorrichtung, die ein eigenes Stromaggregat (1) aufweist, werden die Abgase und/oder die Abwärme des Stromaggregats (1) dazu verwendet, den mechanisch entwässerten Klärschlamm in einer Wirbelkammer (6), einem Paddelmischer (7) und einer Schneckenkammer (8) zusätzlich thermisch zu trocknen.

## Beschreibung

Die vorliegende Erfindung betrifft ein Verfahren zum Trocknen von Klärschlamm, bei dem der Klärschlamm mechanisch entwässert wird und bei dem die Energie zur mechanischen Entwässerung von einem Stromaggregat zur Verfügung gestellt wird. Sie betrifft weiters eine mobile Entwässerungsvorrichtung zur Durchführung des Verfahrens, mit einer mechanischen Entwässerungsvorrichtung und einem Stromaggregat für diese Entwässerungsvorrichtung.

In vielen Gemeinden Österreichs gibt es bereits Kläranlagen, wo zwangsläufig Klärschlamm anfällt. Dieser Klärschlamm enthält zunächst sehr viel Wasser, und damit der Transport nicht zu teuer ist, wird der Klärschlamm zuvor entwässert. Bei kleinen Kläranlagen wäre eine stationäre Entwässerungsvorrichtung nicht rentabel. Es gibt daher mobile Entwässerungsanlagen, die von Kläranlage zu Kläranlage fahren und den Klärschlamm, der in der jeweiligen Anlage gesammelt wurde, entwässern. Bei solch einer mobilen Anlage ist zum Beispiel eine Kammerfilterpresse auf einem Lkw montiert. Da in manchen Kläranlagen das Stromnetz nicht ausreichend dimensioniert ist, um eine Kammerfilterpresse versorgen zu können, sind diese mobilen Anlagen mit einem eigenen Stromaggregat ausgerüstet.

Eine möglichst starke Entwässerung, das heißt ein möglichst hoher Gehalt an Trockensubstanz, ist aus folgenden Gründen vorteilhaft: es muss weniger Masse transportiert werden, das heißt der Transport wird billiger; andererseits wird Klärschlamm umso wertvoller, je trockener er ist. Ab einem gewissen Gehalt an Trockensubstanz bekommt man für Klärschlamm wegen seines Heizwerts bereits etwas bezahlt, wogegen man für sehr feuchten Klärschlamm für die Entsorgung bezahlen muss.

Es ist daher Aufgabe der vorliegenden Erfindung, das Verfahren bzw. die Vorrichtung der eingangs genannten Art so abzuändern, dass ein höherer Gehalt an Trockensubstanz erzielt werden kann, ohne dass dies hohe zusätzliche Kosten mit sich bringt.

Diese Aufgabe wird bei einem Verfahren der eingangs genannten Art erfindungsgemäß dadurch gelöst, dass die Abwärme und/oder die Abgase des Stromaggregats zur thermischen Trocknung des mechanisch entwässerten Klärschlamms verwendet werden.

Das Stromaggregat der mobilen Entwässerungsanlagen wird meist von einem Dieselmotor angetrieben. Bisher wurde weder die von der Kühlung abgeführte Wärme noch die in den Abgasen enthaltene Wärmeenergie genutzt. Diese Energie wird nun erfindungsgemäß dazu verwendet, den Trockengehalt des Klärschlamms zu erhöhen. Dies ist ohne zusätzliche Kosten für Energie möglich.

Die Abgase können indirekt, über einen Wärmetauscher, zur thermischen Trocknung des Klärschlamms verwendet werden, oder es kann auch der Klärschlamm direkt mit den Abgasen des Stromaggregats in Kontakt gebracht werden.

Bei der Erwärmung von Klärschlamm kann es zu Geruchsbelästigung kommen. Bei der indirekten Trocknung des Klärschlamms kann diese dadurch beseitigt werden, dass die bei der thermischen Trocknung entstehenden Abgase gereinigt und dann dem Stromaggregat als Verbrennungsluft zugeführt werden. Bei der direkten Trocknung ist dies nicht möglich, weil die Abgase zu wenig Sauerstoff und zu viel Kohlendioxid enthalten. Hier ist es zweckmäßig, die bei der thermischen Trocknung entstehenden Abgase in einer Feuerung zu verbrennen, wobei auch die dadurch entstehende Abwärme zur Trocknung des Klärschlamms verwendet wird.

Vorzugsweise wird zusätzlich auch die Abwärme einer Solaranlage zur thermischen Trocknung des mechanisch entwässerten Klärschlamms verwendet.

Schließlich ist es zweckmäßig, wenn die Temperatur bei-der thermischen Trocknung des Klärschlamms unter 200 Grad Celsius liegt. Bei solchen Temperaturen ist eine Emission von Schwermetallen über die Gasphase nicht möglich.

Die mobile Entwässerungsvorrichtung zur Durchführung des Verfahrens ist dadurch gekennzeichnet, dass zur thermischen Trocknung des mechanisch entwässerten Klärschlamms eine Wirbelkammer sowie gegebenenfalls ein Paddelmischer und/oder eine Schneckenkammer vorgesehen sind, wobei eine Rauchgasleitung vom Auspuff des Stromaggregats entweder zur Wirbelkammer führt oder aber zur Primärseite eines Wärmetauschers, dessen Sekundärseite an die Wirbelkammer angeschlossen ist.

Anhand der beiliegenden Zeichnungen wird die vorliegende Erfindung näher erläutert. Es zeigt: Fig. 1 eine Schemazeichnung einer erfindungsgemäßen Vorrichtung mit indirekter Trocknung; Fig. 2 eine Schemazeichnung einer erfindungsgemäßen Vorrichtung mit direkter Trocknung; und Fig. 3 den Paddelmischer und die Schneckenkammer in größerem Detail.

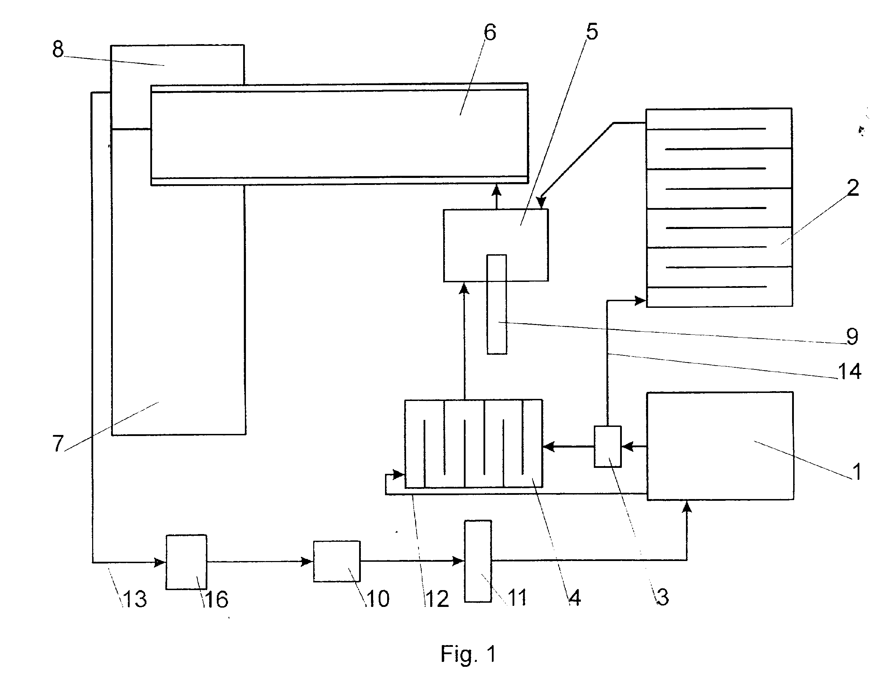

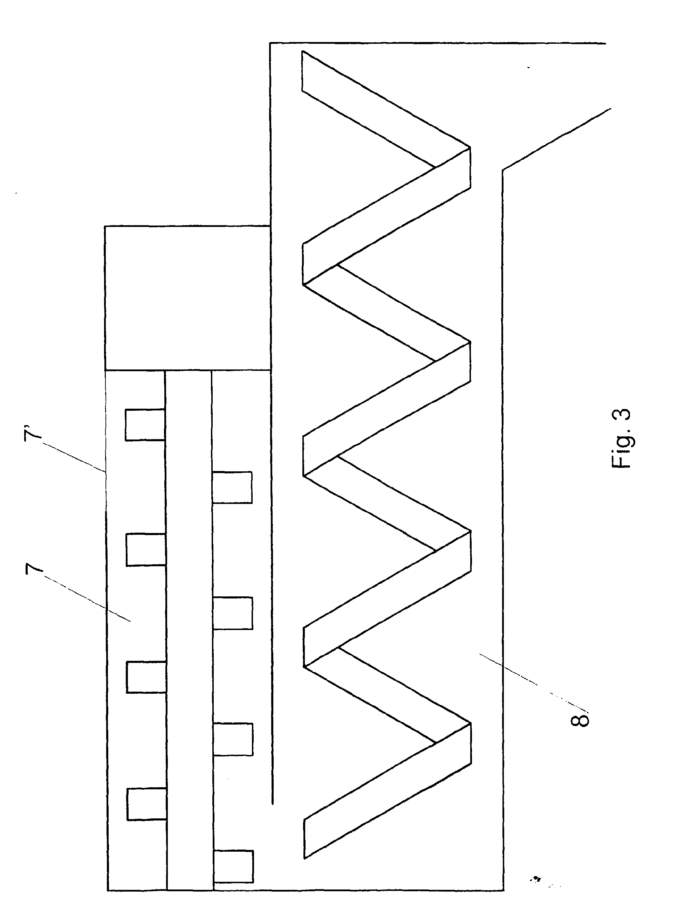

Die Abgase eines Stromaggregats 1 (s. Fig. 1) werden über eine Rauchgasleitung 12 zur Primärseite eines Wärmetauschers 4 geführt. Von dort gelangen sie ins Freie. Die erwärmte Kühlluft des Stromaggregats 1 gelangt über ein 3-Wege-Ventil 3 und Heißluft-Leitungen 14 zum Teil zu einer Solaranlage 2, zum anderen Teil zur Sekundärseite des Wärmetauschers 4. Von dort gelangen beide Teile, nachdem sie zusätzlich erwärmt wurden, in eine Mischkammer 5, in der auch der entwässerte Klärschlamm, nachdem er fein zerteilt wurde, über eine Zubringerschnecke 9 eingebracht wird. Der Klärschlamm wird zusammen mit der Heißluft in eine Wirbelkammer 6 gebracht. Dort erfolgt die erste Trocknung. Durch den Abfallschacht der Wirbelkammer 6 strömt die Heißluft zusammen mit dem Schlammstaub in einen Paddelmischer 7 (Einlassöffnung 7', siehe Fig. 3). Dort erfolgt die zweite Trocknung. Schließlich gelangt der Klärschlamm in eine Schneckenkammer 8, wo die Nachtrocknung erfolgt. Der Paddelmischer 7 und die Schneckenkammer 8 sind übereinander angeordnet. Aus der Schneckenkammer 8 wird der getrocknete Klärschlamm über ein Förderband ins Freie transportiert.

Die bei der Trocknung entstehenden Abgase werden von einem Sauggebläse 16 (s. Fig. 1) über eine Absaugleitung 13 aus der Schneckenkammer 8 abgesaugt. Sie werden zunächst in einem Zyklon (nicht dargestellt) von gröberen Staubteilen getrennt, danach in einer Filteranlage 10 gereinigt und schließlich in einem Durchlaufkühler 11 gekühlt. Danach werden sie als Verbrennungsluft dem Stromaggregat 1 zugeführt. Organische Verunreinigungen, die zu einer Geruchsbelästigung führen könnten, werden dadurch verbrannt.

Durch die Abwärmebehandlung wird die Feuchtigkeit um 10 bis 20% reduziert. Der genaue Wert hängt vom Durchsatz und von der Länge er Trockenkammern ab. Besonders vorteilhaft ist, dass der Klärschlamm durch die Wärmebehandlung von Salmonellen und Dioxin frei wird. Er eignet sich deshalb sehr gut als landwirtschaftlicher Dünger.

Bei der Erprobung der Vorrichtung, die bei einer Kläranlage erfolgte, konnte keine zusätzliche Geruchsbelästigung wahrgenommen werden.

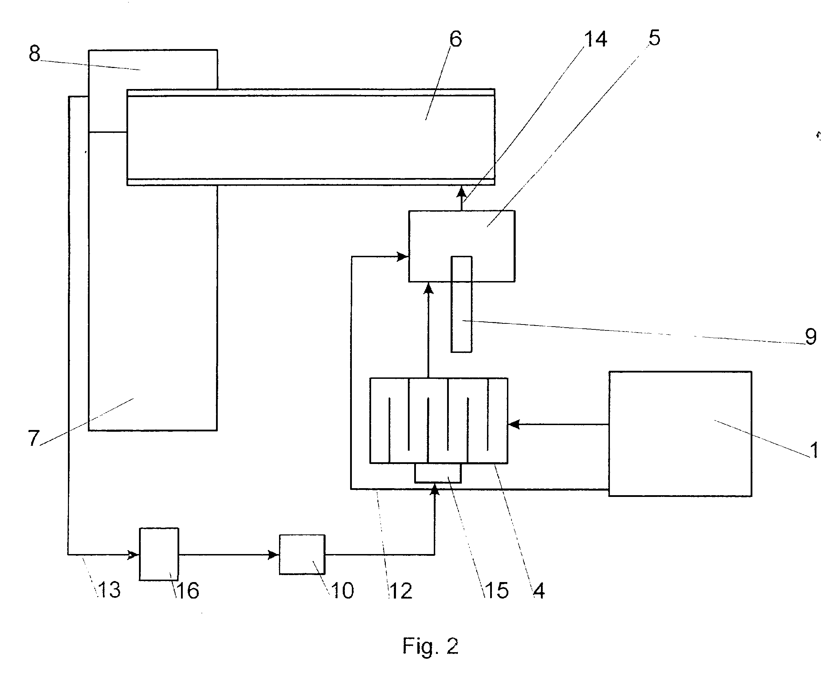

In Fig. 2 ist eine andere Ausführungsform der vorliegenden Erfindung dargestellt. Gemäß dieser Ausführungsform werden die Abgase direkt, also nicht über einen Wärmetauscher, der Mischkammer 5 zugeführt. Außerdem fehlt hier die Solaranlage 2, obwohl natürlich auch hier eine Solaranlage eingesetzt werden könnte.

Die aus der Schneckenkammer 8 abgesaugten Abgase sind schon einmal als Verbrennungsluft verwendet worden und können daher nicht mehr dem Stromaggregat 1 zugeführt werden. Um eine Geruchsbelästigung auszuschließen, wird diese Abluft in einer Feuerung 15 verbrannt, die z.B. mit Öl betrieben wird. Die Abluft dieser Feuerung strömt primärseitig durch den Wärmetauscher 4, sodass auch bei dieser Ausführungsform die Kühlluft des Stromaggregats 1 zusätzlich erwärmt wird. Diese Kühlluft wird in der Mischkammer 5 mit den Abgasen des Stromaggregats 1 vereinigt.

Bei dieser Ausführungsform kann die Restfeuchtigkeit auf bis zu 10% herabgesetzt werden! Dieser Klärschlamm ist daher hervorragend als Brennmaterial für Großheizanlagen geeignet.

## Patentansprüche

1. Verfahren zum Trocknen von Klärschlamm, bei dem der Klärschlamm mechanisch entwässert wird und bei dem die Energie zur mechanischen Entwässerung von einem Stromaggregat zur Verfügung gestellt wird, **dadurch gekennzeichnet,** dass die Abwärme und/oder die Abgase des Stromaggregats zur thermischen Trocknung des mechanisch entwässerten Klärschlamms verwendet werden.

2. Verfahren nach Anspruch 1, **dadurch gekennzeichnet,** dass die Abgase indirekt, über einen Wärmetauscher, zur thermischen Trocknung des Klärschlamms verwendet werden.

3. Verfahren nach Anspruch 2, **dadurch gekennzeichnet,** dass die bei der thermischen Trocknung entstehenden Abgase gereinigt und dann dem Stromaggregat als Verbrennungsluft zugeführt werden.

4. Verfahren nach Anspruch 1, **dadurch gekennzeichnet,** dass der Klärschlamm direkt mit den Abgasen des Stromaggregats in Kontakt gebracht wird.

5. Verfahren nach Anspruch 4, **dadurch gekennzeichnet,** dass die bei der thermischen Trocknung entstehenden Abgase in einer Feuerung verbrannt werden, wobei auch die dabei entstehende Abwärme zur Trocknung des Klärschlamms verwendet wird.

6. Verfahren nach einem der Ansprüche 1 bis 5, **dadurch gekennzeichnet,** dass zusätzlich auch die Abwärme einer Solaranlage zur thermischen Trocknung des mechanisch entwässerten Klärschlamms verwendet wird.

7. Verfahren nach einem der Ansprüche 1 bis 6, **dadurch gekennzeichnet,** dass die Temperatur bei der thermischen Trocknung des Klärschlamms unter 200 C liegt.

8. Mobile Entwässerungsvorrichtung zur Durchführung des Verfahrens nach einem der Ansprüche 1 bis 7, mit einer mechanischen Entwässerungsvorrichtung und einem Stromaggregat für diese Entwässerungsvorrichtung, dadurch gekennzeichnet, dass zur thermischen Trocknung des mechanisch entwässerten Klärschlamms eine Wirbelkammer sowie gegebenenfalls ein Paddelmischer und/oder eine Schneckenkammer vorgesehen sind, wobei eine Rauchgasleitung vom Auspuff des Stromaggregats entweder zur Wirbelkammer führt oder aber zur Primärseite eines Wärmetauschers, dessen Sekundärseite an die Wirbelkammer angeschlossen ist.
